# EUROPÄISCHE PATENTSCHRIFT

(11) **EP 3 551 876 B1**
(45) Veröffentlichungstag und Bekanntmachung des Hinweises auf die Patenterteilung: **07.04.2021**
(21) Anmeldenummer: 17809199.7
(22) Anmeldetag: 10.11.2017
(51) Int. Cl.: F03D 7/02, F03D 17/00, A62C 3/00

(54) **WINDENERGIEANLAGE UND VERFAHREN ZUM ABSAUGEN VON RAUCH IN EINER WINDENERGIEANLAGE**
WIND TURBINE AND METHOD OF EXTRACTING SMOKE IN A WIND TURBINE
ÉOLIENNE ET MÉTHODE D'EXTRAIRE LA FUMÉE DANS UNE ÉOLIENNE

(30) Priorität: 12.12.2016 DE 102016124016
(43) Veröffentlichungstag der Anmeldung: 16.10.2019
(73) Patentinhaber: Wobben Properties GmbH, 26607 Aurich (DE)
(72) Erfinder: KNOOP, Frank, 26607 Aurich (DE); COORDES, Ihno, 26632 Ihlow (DE); GRÜNHAGEL, Jörg, 26607 Aurich (DE)
(74) Vertreter: Eisenführ Speiser
(86) Internationale Anmeldenummer: PCT/EP2017/078850
(87) Internationale Veröffentlichungsnummer: WO 2018/108402

(56) Entgegenhaltungen:
- EP-A1- 1 122 425
- CN-A- 103 656 930
- DE-A1- 10 062 405
- DE-U1- 29 706 030
- KR-B1- 101 394 238
- US-A1- 2013 309 088

## Beschreibung

Die vorliegende Erfindung betrifft eine Windenergieanlage und ein Verfahren zum Absaugen von Rauch in einer Windenergieanlage.

Windenergieanlagen weisen sowohl in der Gondel als auch im unteren Bereich des Turms typischerweise eine Vielzahl von elektrischen und insbesondere leistungselektronischen Einheiten auf. In der Gondel kann beispielsweise ein Generator und ein Gleichrichter und im unteren Bereich des Turms kann ein Wechselrichter, andere Leistungselektronikeinheiten sowie beispielsweise ein Transformator vorgesehen sein. Zur Vermeidung eines Ausbreitens eines Feuers bzw. von Rauch können Rauchschutzdecken oder Brandschutzdecken im Turm der Windenergieanlage vorgesehen sein.

Rauchschutzdecken oder Brandschutzdecken sind jedoch teuer in ihrer Herstellung bzw. Montage.

In der prioritätsbegründenden deutschen Patentanmeldung wurden die folgenden Dokumente recherchiert: DE 100 62 405 A1, WO 2015/078480 1 und US 2011/0138699 A1 Ein System zum Detektieren und Ableiten von Rauch aus der Gondel einer Windkraftanlage ist aus KR101394238B B1 bekannt.

Es ist somit eine Aufgabe der vorliegenden Erfindung, eine Windenergieanlage mit einem verbesserten Brandschutz vorzusehen.

Diese Aufgabe wird durch eine Windenergieanlage nach Anspruch 1 gelöst.

Somit wird eine Windenergieanlage mit einem Turm, einer Gondel, mindestens einem Rauchmelder im Bereich des Turms und/oder im Bereich der Gondel, mindestens einem Lüfter, welcher in dem Turm und/oder in der Gondel angeordnet ist, und eine Steuereinheit vorgesehen, welche mittels der Feuermelder einen Brandfall oder eine Rauchentwicklung in der Windenergieanlage erfasst und die sich im Turm und/oder in der Gondel befindlichen Lüfter aktiviert, um den entstandenen Rauch nach außen abzusaugen. Dies erfolgt insbesondere, wenn sich Personen in der Windenergieanlage befinden, um eine Rauchvergiftung der Personen zu verhindern. Wenn eine Wartung der Windenergieanlage erfolgt, dann kann die Windenergieanlage in eine Wartungsbetriebsart geschaltet werden und die Steuereinheit kann die Lüfter bei einer Rauchentwicklung aktivieren.

Gemäß einem Aspekt der vorliegenden Erfindung ist eine Evakuierungsplattform an dem Turm vorgesehen.

Gemäß einem weiteren Aspekt der vorliegenden Erfindung ist eine Zugangstür in dem Turm vorgesehen. Die Steuereinheit kann den mindestens einen Lüfter in Abhängigkeit davon steuern, ob die Zugangstür geöffnet worden ist.

Gemäß einem weiteren Aspekt der vorliegenden Erfindung ist eine Öffnung in dem Turm und/oder eine Öffnung in der Gondel vorgesehen, wobei durch die Öffnung in der Gondel der Rauch abgesaugt werden kann.

Gemäß der Erfindung wird eine Windenergieanlage mit einer Rauchabsauganlage im Inneren der Windenergieanlage beispielsweise im Turm und/oder in der Gondel der Windenergieanlage vorgesehen. Die Rauchabsauganlage kann z.B. die sich in der Windenergieanlage befindlichen Lüfter verwenden, um Rauch beispielsweise aus dem unteren Turmbereich oder in der Gondel nach außen abzusaugen.

Optional können zusätzlich zu dem bereits vorhandenen Lüfter zum Kühlen des Generators der Leistungselektronik oder des Trafos weitere Lüfter eingebaut werden, um eine effektive Absaugung einer Rauchentwicklung in der Windenergieanlage zu ermöglichen.

Die Erfindung betrifft insbesondere die Situation, dass Wartungs- bzw. Servicepersonal in der Windenergieanlage vorhanden ist, wenn es zu einem Brand kommt. In einem derartigen Fall muss sichergestellt werden, dass das Servicepersonal bzw. das Wartungspersonal so schnell wie möglich aus der Windenergieanlage evakuiert wird. Da die Rauchvergiftung die häufigste Todesursache bei Brandfällen ist, soll gemäß der Erfindung eine möglichst effektive Rauchabsaugung ermöglicht werden. Zur Erhöhung der Sicherheit können die verwendeten Lüfter eine unterbrechungsfreie Stromversorgung aufweisen.

Die erfindungsgemäße Windenergieanlage ist vorteilhaft, weil beispielsweise auf Brandschutzdecken bzw. Rauchschutzdecken verzichtet werden kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht einer Windenergieanlage gemäß einem ersten Ausführungsbeispiel der Erfindung und
- Fig. 3: zeigt eine perspektivische Ansicht einer Windenergieanlage gemäß einem zweiten Ausführungsbeispiel der Erfindung.

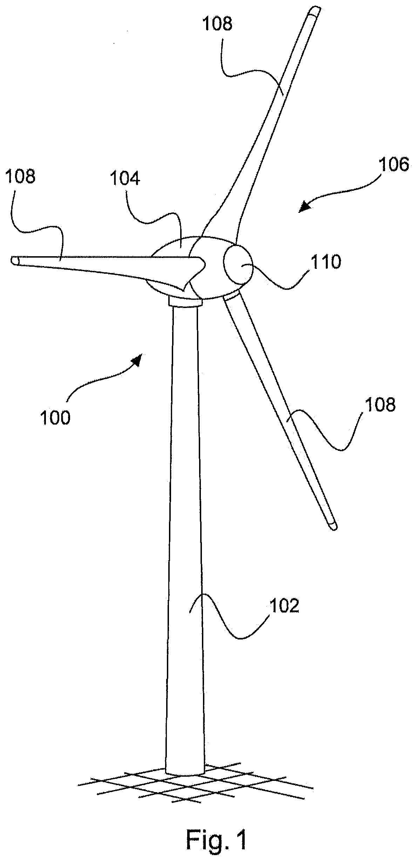

Fig. 1 zeigt eine schematische Darstellung einer Windenergieanlage gemäß der Erfindung. Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

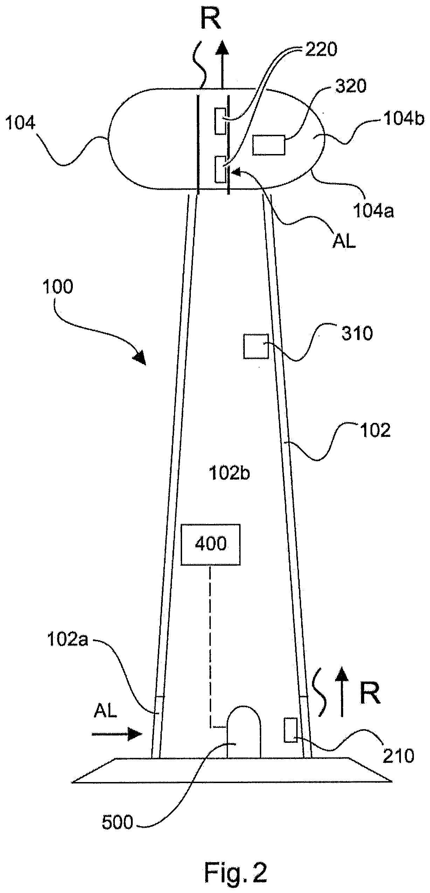

Fig. 2 zeigt eine schematische Schnittansicht einer Windenergieanlage gemäß einem ersten Ausführungsbeispiel der Erfindung. In Fig. 2 ist eine Windenergieanlage mit einem Turm 102 und einer Gondel 104 gezeigt. Im unteren Bereich der Windenergieanlage ist mindestens ein erster Lüfter 210 und in der Gondel kann ein zweiter Lüfter 220 vorgesehen sein. Der zweite Lüfter 220 kann im Bereich des Generators der Windenergieanlage vorgesehen sein. Beispielsweise kann im unteren Bereich des Turms 102 eine Öffnung 101a vorgesehen sein, durch welche Außenluft AL in das Innere 102b des Turms 102 der Windenergieanlage 100, insbesondere mittels des Lüfters 210, eingesogen wird. Wenn der erste Lüfter 210 und der zweite Lüfter 220 aktiviert sind, dann kann Rauch aus dem unteren Bereich des Turms 102 in die Gondel 104 und dann nach außen abgesaugt werden. Die Gondel 104 kann mindestens eine Öffnung 104a aufweisen, durch welche Außenluft AL in das Innere 104b der Gondel eingesogen werden kann. Die Windenergieanlage kann Rauchmelder 310, 320 in den Turm 102 und/oder in der Gondel 104 aufweisen. Sobald die Rauchmelder eine Rauchbildung erfasst haben, kann der Betrieb der Windenergieanlage angepasst werden. Insbesondere können die Lüfter 210, 220 aktiviert werden, so dass frische Außenluft AL durch die Öffnung 102a in den Turm 102 eingesaugt und der Rauch R, welcher sich im Inneren des Turms und/oder der Gondel 104 befindet, kann beispielsweise nach oben zu der Gondel und von der Gondel dann nach außen abgesaugt werden.

Die Windenergieanlage kann eine Steuereinheit 400 aufweisen, welche mit dem ersten und zweiten Lüfter 210, 220 sowie den Rauchmeldern 310, 320 gekoppelt ist. Wenn die Rauchmelder 310, 320 Rauch melden, dann aktiviert die Steuereinheit 400 den ersten und/oder zweiten Lüfter 310, 320. Falls die Öffnung 102a und die Öffnung 104a steuerbar ist, d.h. geöffnet oder geschlossen werden kann, dann können diese Öffnungen geöffnet werden, so dass Frischluft eingesaugt und der Rauch abgesaugt werden kann.

Im unteren Bereich des Turms 102a kann eine Tür 500 vorgesehen sein. Wenn die Tür 500 geöffnet wird, d.h. wenn Service- oder Wartungspersonal die Windenergieanlage betritt, dann kann die Steuereinheit 400 den Betrieb der Windenergieanlage stoppen, d. h. die Regelung des Rotors wird gestoppt. Optional kann das Wartungspersonal einen Wartungsschalter betätigen, so dass die Windenergieanlage in eine Wartungsbetriebsart versetzt wird. Wenn die Steuereinheit 400 dann in der Wartungsbetriebsart mittels der Rauchmelder 310, 320 eine Rauchbildung innerhalb des Turms und/oder der Gondel 104 erfasst, dann wird ein Warnsignal ausgegeben, damit das Wartungspersonal die Windenergieanlage so schnell wie möglich evakuieren kann. Ferner wird der Betrieb des ersten und zweiten Lüfters 210, 220 aktiviert, um den sich in der Windenergieanlage 100 befindlichen Rauch abzusaugen. Dies ist insbesondere vorteilhaft, weil somit die Gefahr einer Rauchvergiftung für das sich in der Windenergieanlage befindliche Wartungspersonal erheblich reduziert werden kann.

Optional weist der Lüfter 210 bzw. der Lüfter 220 eine unterbrechungsfreie Stromversorgung auf. Die Rauchmelder 310, 320 können ebenfalls eine unterbrechungsfreie Stromversorgung aufweisen. Alternativ dazu können die Rauchmelder Akkus bzw. Batterien aufweisen, um weiterbetrieben werden zu können.

Durch das Absaugen des sich in der Windenergieanlage befindlichen Rauches kann die Personensicherheit innerhalb der Windenergieanlage auch in einem Brandfall verbessert werden. Somit kann dem Servicepersonal mehr Zeit für eine Evakuierung der Windenergieanlage ermöglicht werden.

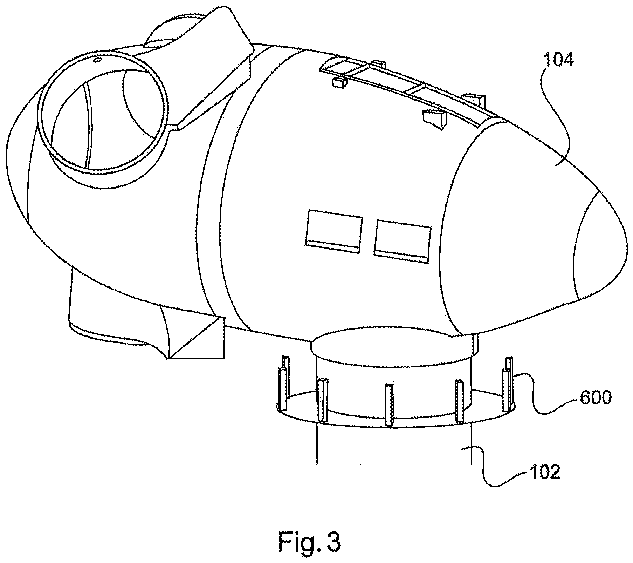

Fig. 3 zeigt eine perspektivische Ansicht einer Windenergieanlage gemäß einem zweiten Ausführungsbeispiel der Erfindung. Gemäß einem zweiten Ausführungsbeispiel, welches auf dem ersten Ausführungsbeispiel beruht, weist die Windenergieanlage bzw. der Turm 102 der Windenergieanlage mindestens eine Evakuierungsplattform 600 auf. Die Evakuierungsplattform 600 ist insbesondere im oberen Bereich des Turms vorgesehen. Falls es zu einem Brandfall in der Windenergieanlage kommt und das Service- bzw. das Wartungspersonal nicht rechtzeitig evakuiert werden, dann kann das Wartungs- bzw. Servicepersonal sich auf die Evakuierungsplattform 600 flüchten. Anschließend kann das Personal dann evakuiert werden.

## Patentansprüche

1. Windenergieanlage (100), mit
einem Turm (102),
einer Gondel (104),
mindestens einem Rauchmelder (310, 320) im Bereich des Turms (102) und/oder im Bereich der Gondel (104)
**gekennzeichnet durch** Mittel zum Erfassen, ob sich Personen in der Windenergieanlage (100) befinden oder ob die Windenergieanlage sich in einer Wartungsbetriebsart befindet,
mindestens einem Lüfter (210, 220), welcher in den Turm (102) und/oder in der Gondel (104) angeordnet ist, und
einer Steuereinheit (400), welche mittels der Rauchmelder (320, 310) einen Brandfall bzw. eine Rauchentwicklung in der Windenergieanlage (100) erfasst und die sich im Turm (102) und/oder in der Gondel (104) befindlichen Lüfter (210, 220) aktiviert, um den entstandenen Rauch nach außen abzusaugen und um eine Rauchvergiftung von Personen in der Windenergieanlage zu verhindern.

2. Windenergieanlage nach Anspruch 1, ferner mit
einer Evakuierungsplattform (600) an dem Turm (102).

3. Windenergieanlage nach Anspruch 1 oder 2, ferner mit
einer Zugangstür (500) in dem Turm (102),
wobei die Steuereinheit (400) dazu ausgestaltet ist, den mindestens einen Lüfter (210, 220) in Abhängigkeit davon zu steuern, ob die Zugangstür (500) geöffnet worden ist und/oder ob sich die Windenergieanlage in einer Wartungsbetriebsart befindet.

4. Windenergieanlage nach einem der Ansprüche 1 bis 3, ferner mit einer Öffnung (102a) in dem Turm (102) und einer Öffnung (104a) in der Gondel.

5. Verfahren zum Absaugen von Rauch in einer Windenergieanlage (100), welche einen Turm (102) und eine Gondel (104) aufweist, mit den folgenden Schritten:
Erfassen eines Brandfalls oder einer Rauchentwicklung durch mindestens einen Rauchmelder (310, 320) im Bereich des Turms (102) und/oder im Bereich der Gondel (104),
Erfassen, ob sich Personen in der Windenergieanlage (100) befinden oder ob die Windenergieanlage sich in einer Wartungsbetriebsart befindet, und
Aktivieren von Lüfter (210, 220) in dem Turm (102) und/oder in der Gondel (104), um den entstandenen Rauch nach außen abzusaugen und eine Rauchvergiftung zu verhindern.

## Claims

1. A wind turbine (100) comprising
a tower (102),
a pod (104),
at least one smoke detector (310, 320) in the region of the tower (102) and/or in the region of the pod (104),
**characterized by** means for detecting whether there are people in the wind turbine (100) or whether the wind turbine is in a maintenance mode,
at least one fan (20, 220) arranged in the tower and/or in the pod (104), and
a control unit (400) which detects a fire situation or smoke development in the wind turbine (100) by means of the smoke detectors (320, 310) and activates the fans (210, 220) disposed in the tower (102) and/or in the pod (104) in order to suck away the smoke produced to the exterior and to prevent smoke poisoning of people in the wind turbine.

2. A wind turbine according to claim 1 and further comprising an evacuation platform (600) at the tower (102).

3. A wind turbine according to claim 1 or claim 2 and further comprising
an access door 500) in the tower (102),
wherein the control unit (400) is adapted to control the at least one fan (210, 220) in dependence on whether the access door (500) has been opened and/or whether the wind turbine is in a maintenance mode.

4. A wind turbine according to one of claims 1 to 3 and further comprising
an opening (102a) in the tower (102) and an opening (104a) in the pod.

5. A method of sucking away smoke in a wind turbine which has a tower (102) and a pod (104), comprising the following steps:
detecting a fire situation or smoke development by at least one smoke detector (310, 320) in the region of the tower (102) and/or in the region of the pod (104),
detecting whether there are people in the wind turbine (100) or whether the wind turbine is in a maintenance mode, and
activating fans (210, 220) in the tower (102) and/or in the pod (104) in order to suck away the smoke produced to the exterior and to prevent smoke poisoning.

## Revendications

1. Eolienne (100), avec
une tour (102),
une nacelle (104),
au moins un détecteur de fumée (310, 320) dans la zone de la tour (102) et/ou dans la zone de la nacelle (104),
**caractérisée par** des moyens permettant de détecter si des personnes se trouvent dans l'éolienne (100) ou si l'éolienne se trouve dans un mode de fonctionnement d'entretien,
au moins un ventilateur (210, 220), lequel est disposé dans la tour (102) et/ou dans la nacelle (104), et
une unité de commande (400), laquelle, au moyen des détecteurs de fumée (320, 310), détecte un incendie ou un dégagement de fumée dans l'éolienne (100) et qui active des ventilateurs (210, 220) se trouvant dans la tour (102) et/ou dans la nacelle (104), afin d'évacuer la fumée produite vers l'extérieur par aspiration et afin d'empêcher une intoxication de personnes dans l'éolienne par inhalation de fumées.

2. Eolienne selon la revendication 1, en outre avec une plate-forme d'évacuation (600) sur la tour (102) .

3. Eolienne selon la revendication 1 ou 2, en outre avec
une porte d'accès (500) dans la tour (102),
dans laquelle l'unité de commande (400) est conçue pour commander l'au moins un ventilateur (210, 220) selon que la porte d'accès (500) a été ouverte et/ou que l'éolienne se trouve dans un mode de fonctionnement d'entretien.

4. Eolienne selon l'une quelconque des revendications 1 à 3, en outre avec
une ouverture (102a) dans la tour (102) et une ouverture (104a) dans la nacelle.

5. Procédé pour aspirer de la fumée dans une éolienne (100), laquelle présente une tour (102) et une nacelle (104), avec les étapes suivantes :
la détection d'un incendie ou d'un dégagement de fumée par au moins un détecteur de fumée (310, 320) dans la zone de la tour (102) et/ou dans la zone de la nacelle (104),
le fait de détecter si des personnes se trouvent dans l'éolienne (100) ou si l'éolienne se trouve dans un mode de fonctionnement d'entretien, et
l'activation des ventilateurs (210, 220) dans la tour (102) et/ou dans la nacelle (104), afin d'évacuer la fumée produite vers l'extérieur par aspiration et d'empêcher une intoxication par inhalation de fumées.
